# EUROPEAN PATENT APPLICATION

(11) **EP 4 403 983 A1**
(43) Date of publication of application: **24.07.2024**
(21) Application number: 22869720.7
(22) Date of filing: 05.08.2022
(51) Int. Cl.: G02C 7/06

(54) **SPECTACLE LENS**

(30) Priority: 15.09.2021 JP 2021150384
(71) Applicant: Hoya Lens Thailand Ltd., Pathumthani 12130 (TH)
(72) Inventor: QI, Hua, Tokyo 160-8347 (JP)
(74) Representative: Betten & Resch
(86) International application number: PCT/JP2022/030171
(87) International publication number: WO 2023/042572

(57) **Abstract**

There is provided a spectacle lens, including: a central clear area 2 that is an area including an eye point and allows a light beam entering from an object-side surface to exit from an eyeball-side surface, enter into a wearer's pupil, and converge on a retina; and a functional area 3 that is an annular area surrounding the central clear area 2, and that does not allow at least a part of the light beam entering into the wearer's pupil to converge on the retina, while allowing the light beam entering from the object-side surface to exit from the eyeball-side surface, wherein in planar view, a maximum width of a rectangular portion in a horizontal direction in a range between d [mm] on an upper side and d [mm] on a lower side from a horizontal line passing through the eye point, is larger from the eye point toward a nose than from the eye point toward an ear when d is at least one value in a range of 1.00 to 2.00.

## Description

### Technical Field

The present invention relates to a spectacle lens.

### Description of Related Art

As a spectacle lens that suppresses a progression of refractive error such a myopia, there is a lens that has multiple island-like areas formed thereon, having a refractive power more positive than a prescribed refractive power (for example, see Patent document 1).

According to the spectacle lens with this configuration, out of the light beams that enter from an object-side surface and exit from an eyeball-side surface, those that pass through areas other than defocus areas are focused on a wearer's retina, but the light beams that pass through the defocus areas are focused at a position in front of the retina. This will suppress the progression of myopia.

FIG. 1 of Patent document 1 illustrates a case where the island-shaped areas are not provided at and near a geometric center of a lens.

Patent documents 2 and 3 disclose spectacle lenses in which a predetermined configuration is provided at more outer edge side of the spectacle lens than at and near the geometric center of the spectacle lens in order to suppress the progression of myopic refractive error. The spectacle lenses described in Patent documents 2 and 3 do not have a configuration that exhibits an effect of suppressing the progression of myopia at and near the geometric center of the lens, in planar view (FIG. 1 of Patent document 2, FIG. 5A of Patent document 3).

Patent document 4 describes a spectacle lens including a base portion that allows light beams entering from an object-side surface to exit from an eyeball-side surface and converge at a position A on an eyeball's retina, and a defocus area that gives a positive or negative defocus to a transmitted light beam and has an effect of converging the light at a position different from the light transmitted through the base portion.

Paragraph 0102 of the Patent document 4 describes that a function of suppressing the progression of hyperopia is achieved by changing a base material of a spectacle lens from a convex portion to a concave portion. In an example of the spectacle lens described in Patent document 4 (FIG. 5 of Patent document 4), the lens does not have the configuration that exhibits the effect of suppressing the progression of myopia or hyperopia at and near the geometric center of the lens, in planar view.

### Prior art document

### Patent document

[Patent Document 1] US Application Publication No. 2017/0131567
[Patent Document 2] International Publication No. WO2019/166657
[Patent Document 3] US Patent No. 10884264
[Patent Document 4] International Publication No. WO2020/045567

### Summary of the invention

### Problem to be solved by the invention

When the configuration of suppressing the progression of myopia (for example, island-like areas described in Patent document 1) is not provided at the center of the lens, as a matter of course, it is considered that the above-described effect of suppressing the progression of myopia cannot be obtained with a light beam that passes through an area not including the island-like area and enters a wearer's pupil. Instead, a prescribed power is realized in a clear area, resulting in good visibility. In this specification, the area not having the configuration that suppresses the progression of myopia or hyperopia is also referred to as a clear area. The clear area will be described later.

Inventor's research has revealed that a light beam may not converge on a retina, which means that good visibility may not be obtained, because the light beam entering into the wearer's pupil passes through the island-shaped area instead of the clear area when a wearer of spectacle lenses for suppressing the progression of myopia converges his or her eyes for near vision.

Regarding this problem, the inventor's research has revealed that a similar problem occurs not only in the case of the above-described island-like area, but also in the case of the configuration that exhibits the effect of suppressing the progression of myopia or hyperopia (configuration in which some kind of concave area and/or convex area is formed on a surface of a spectacle lens, or configuration in which a member having a different refractive index is embedded inside the spectacle lens, for example, the spectacle lens described in Patent documents 2 to 4). In planar view, an area having the configuration that exhibits the effect of suppressing the progression of myopia or hyperopia is also referred to as a functional area. The functional area will be described later.

In order to make it easier to obtain the effect of suppressing the progression of myopia, it is conceivable to design the clear area to be small and to design the functional area to be correspondingly large. However, such a design of small clear area involves a problem that good visibility may not be obtained when a wearer converges his or her eyes for near vision, as described above. That is, finding by the present inventor is that in a spectacle lens having a clear area and a functional area to exhibit the effect of suppressing the progression of myopia or hyperopia, an alternative approach to that described in this paragraph should be considered.

An object of one aspect of the present invention is to provide a technique that allows good visibility even in near vision when wearing a spectacle lens having a clear area and a functional area.

### Means for solving the problem

A first aspect of the present invention provides a spectacle lens, including:
a central clear area that is an area including an eye point and allows a light beam entering from an object-side surface to exit from an eyeball-side surface, enter into a wearer's pupil, and converge on a retina; and
a functional area that is an annular area surrounding the central clear area, and that does not allow at least a part of the light beam entering into the wearer's pupil to converge on the retina, while allowing the light beam entering from the object-side surface to exit from the eyeball-side surface,
wherein in planar view, a maximum width of a rectangular portion in a horizontal direction in a range between d [mm] on an upper side and d [mm] on a lower side from a horizontal line passing through the eye point, is larger from the eye point toward a nose than from the eye point toward an ear when d is at least one value in a range of 1.00 to 2.00.

A second aspect of the present invention provides the spectacle lens according to the first aspect, wherein d is 1.50.

A third aspect of the present invention provides the spectacle lens according to the first or second aspect, wherein the maximum width of the rectangular portion from the eye point toward the nose in the horizontal direction is 3.60 mm or more.

A fourth aspect of the present invention provides a spectacle lens, including:
a central clear area that is an area including an eye point and allows a light beam entering from an object-side surface to exit from an eyeball-side surface, enter into a wearer's pupil, and converge on a retina; and
a functional area that is an annular area surrounding the central clear area, and that does not allow at least a part of the light beam entering into the wearer's pupil to converge on the retina, while allowing the light beam entering from the object-side surface to exit from the eyeball-side surface,
wherein in planar view, when the central clear area is shaped as an aggregate of all circles with a radius of 2.00 mm that circumscribes a portion of the functional area that is shaped so that the light beam entering into the wearer's pupil does not converge on the retina, without including the other portion on the central clear area side, a shape on an ear side and a shape on a nasal side are asymmetrical with respect to a vertical line passing through the eye point, and a maximum distance from the eye point toward the nose in a horizontal direction is 3.60 mm or more.

A fifth invention provides the spectacle lens according to the fourth invention, wherein at least one of a center of gravity in the shape of the central clear area and a midpoint of a horizontal line passing through the eye point in the shape of the central clear area is located closer to the nose than the eye point.

A sixth aspect or the present invention provides a spectacle lens, including:
a central clear area that is an area including an eye point and allows a light beam entering from an object-side surface to exit from an eyeball-side surface, enter into a wearer's pupil, and converge on a retina; and
a functional area that is an annular area surrounding the central clear area, and that does not allow at least a part of the light beam entering into the wearer's pupil to converge on the retina, while allowing the light beam entering from the object-side surface to exit from the eyeball-side surface,
wherein in planar view, the central clear area extends horizontally toward a nose rather than toward an ear when viewed from the eye point.

A seventh aspect of the present invention provides the spectacle lens according to any one of the first to sixth aspects, including:
an outer clear area, which is an area in contact with the functional area on an outside edge side of the spectacle lens, and which allows the light beam entering from the object-side surface to exit from the eyeball-side surface, enter into the wearer's pupil and converge on the retina.

An eighth aspect of the present invention provides the spectacle lens according to any one of the first to seventh aspects, wherein the functional area does not allow 30% or more of the light beam entering into the wearer's pupil to converged on the retina.

A nineth aspect of the present invention provides the spectacle lens according to any one of the first to eighth aspects, wherein in planar view, the central clear area has a size that fits within a circle with a diameter of 10.00 mm centered on the eye point.

Other aspects of the present invention that can be combined with the above aspects are as follows.

The central clear area (and the base area within the functional area, and further the outer clear area) of one embodiment of the present invention functions as a so-called single focus lens.

A maximum width of the rectangular portion on the nasal side from the eye point may preferably be 4.00 mm or more.

When an envelope surrounding the aggregate is shaped as the central clear area, a maximum distance from the eye point toward the nose in a horizontal direction within the shape may preferably be 4.00 mm or more.

The aggregate may be interpretated as the envelope surrounding the aggregate.

One guideline for a lower limit of the size of the central clear area is that it should be large enough to encompass a circle with a diameter of 3.00 mm (or diameter of 4.00mm, or diameter of 5.00mm) centered on the eye point. One guideline for an upper limit of the size of the central clear area is that it should be within a circle with a diameter of 10.00 mm centered on the eye point. A minimum distance from the eye point to an edge of the central clear area (minimum radius when the clear area is circular in planar view) in a horizontal direction may be 3.60 mm or less. An area of the central clear area may be 80 mm² or less. The shape of the central clear area 2 may be circular, rectangular, elliptical, etc. in planar view.

One guideline for a lower limit of the size of the functional area is that it should be large enough to encompass a circumference with a diameter of 12.50 mm centered on the eye point. One guideline for an upper limit of the size of the functional area is that it should be large enough to encompass a circumference with a diameter of 50.00 mm centered on the eye point.

The shape of the functional area is annular in planar view, and the ring may be circular, rectangular, elliptical, etc., on the inside (i.e. a boundary between the central clear area and the functional area) and/or outside (i.e. a boundary between the outer clear area and the functional area), or a combination thereof.

In the functional area, it may be defined that 30% or more (or 40% or more, 50% or more, or 60% or more) of the light beam entering into the wearer's pupil is not allowed to converge on the retina. When a value of the percentage is large, it is expected that the effect of suppressing the progression of myopia or hyperopia will be large, but visibility will be reduced. The value of the percentage may be appropriately determined in consideration of the effect of suppressing the progression of myopia or hyperopia and visibility. An upper limit may be, for example, 70%.

In the functional area, the area of the configuration (convex area, embedding structure) that exhibits the effect of suppressing the progression of myopia or hyperopia, may be defined as 30% (or 40% or more, 50% or more, 60% or more) or more of an entire functional area.

The technical idea of the present invention is also reflected in a pair of spectacle lenses in which one embodiment of the present invention is applied to each of a right-eye lens and a left-eye lens.

The technical idea of the present invention is also reflected in a spectacle lens fitted into a frame, while cutting a portion near its peripheral edge to match a specified frame shape.

### Advantage of the Invention

According to one aspect of the present invention, there is provided a technique that allows good visibility to be obtained even in a near vision when wearing a spectacle lens including a clear area and a functional area.

### Brief description of the drawings

FIG. 1 is a schematic enlarged planar view for explaining (Definition 1) regarding a central clear area of a spectacle lens according to one aspect of the present invention.
FIG. 2 is a schematic enlarged planar view for explaining (Definition 2) regarding the central clear area of the spectacle lens according to one aspect of the present invention.
FIG. 3 is a schematic planar view of a <specific example 1> of a spectacle lens according to one aspect of the present invention before applying one aspect of the present invention.
FIG. 4 is a schematic planar view of a <specific example 1> of a spectacle lens according to one aspect of the present invention after applying one aspect of the present invention.
FIG. 5 is a schematic planar view of a <specific example 2> of the spectacle lens according to one aspect of the present invention before applying one aspect of the present invention.
FIG. 6 is a schematic planar view of a <specific example 2> of the spectacle lens according to one aspect of the present invention after applying one aspect of the present invention.
FIG. 7 is a schematic planar view of a <specific example 3> of the spectacle lens according to one aspect of the present invention before applying one aspect of the present invention.
FIG. 8 is a schematic planar view of a <specific example 3> of the spectacle lens according to one aspect of the present invention after applying one aspect of the present invention.
FIG. 9 is a schematic planar view of a <specific example 4> of a spectacle lens according to one aspect of the present invention before applying one aspect of the present invention.
FIG. 10 is a schematic planar view of a <specific example 4> of a spectacle lens according to one aspect of the present invention after applying one aspect of the present invention.

Embodiments of the present invention will be described below. The following description based on the drawings is an example, and the present invention is not limited to the embodiments given as examples.

The spectacle lens described in this specification has an object-side surface and an eyeball-side surface. The "object-side surface" is the surface located on an object side when spectacles equipped with spectacle lenses are worn by a wearer, and the "eyeball side surface" is the opposite, that is, the surface located on an eyeball side when spectacles with spectacle lenses are worn by a wearer. This relationship also applies to a lens base material that is the basis of a spectacle lens. In other words, the lens base material also has the object-side surface and the eyeball-side surface.

In this specification, when wearing the spectacle lens, a horizontal direction is X direction, a vertical (up and down) direction is Y direction, and a thickness direction of the spectacle lens and perpendicular to the X and Y directions is Z direction. Z direction is also an optical axis direction of the spectacle lens.

Facing the wearer, the right side is +X direction, the left side is -X direction, the top is +Y direction, the bottom is -Y direction, the object side is +Z direction, and the opposite direction (backward direction) is -Z direction. In this specification, "planar view" refers to a state when viewed from the +Z direction to the -Z direction.

Each figure of the present application illustrates a case where a right eye lens is viewed from above, and when the right eye lens is worn, a nasal side direction is the +X direction, and an ear side direction is the -X direction.

When the functional area is provided only on an eyeball-side outermost surface, a viewing state from the -Z direction to the +Z direction may be regarded as the planar view. Hereinafter, when discussing "positions" such as an eye point and a geometric center of a spectacle lens, unless otherwise specified, it refers to the position in planar view.

In this specification, "...to..." refers to a value greater than or equal to a predetermined value and less than or equal to a predetermined value.

### <Spectacle lens>

A spectacle lens according to one aspect of the present invention includes a central clear area and a functional area.

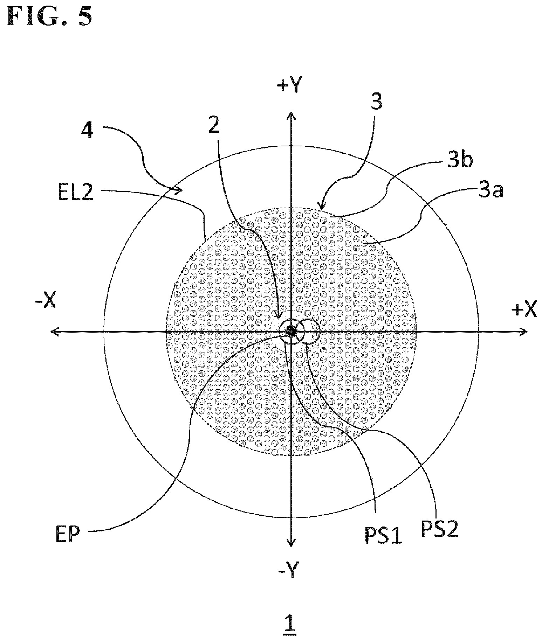

The central clear area is a portion having a smooth surface shape that can realize a prescribed refractive power of the wearer from a geometrical optics perspective. The central clear area is a portion corresponding to a first refraction area of Patent document 1, and this is the area provided as a base area at and near a lens center of the spectacle lens illustrated in FIG. 5 of Patent document 4. Further, the central clear area is the area including an eye point, and this is an area where the light beam entering from the object-side surface is allowed to exit from the eyeball-side surface, enter into the wearer's pupil, and converge on the retina.

The prescribed refractive power (spherical power, astigmatic power, astigmatic axis, etc.) can be achieved by the central clear area of one embodiment of the present invention. This spherical power may be a power that should be corrected when viewed with a front vision (a distance to an object is about infinity to 1m) (for example, it is a distance vision power, and hereafter, distance vision power will be exemplified.), or may be a power that should be corrected when viewed with an intermediate vision (1m to 40cm) or a near vision (40cm to 10cm).

Further, the central clear area does not have any configuration (eg, defocus area, convex area and/or concave area, embedding structure, etc.) intended to exhibit an effect of suppressing the progression of myopia or hyperopia.

The central clear area (and the base area within the functional area, and further the outer clear area) of one embodiment of the present invention functions as a so-called single focus lens.

Prescription data of wearer's information is written on a lens bag of the spectacle lens. In other words, with this lens bag, the lens can be identified as a spectacle lens based on the prescription data of the wearer's information, and usually, the spectacle lens comes in a set with the lens bag. Therefore, the technical idea of the present invention is reflected in the spectacle lens with the lens bag attached thereto, and the same applies to the set of the lens bag and the spectacle lens.

"Eye point (EP)" is the position where a line of sight passes when facing straight ahead when wearing the spectacle lenses. One aspect of the present invention shows a case in which the geometric center of the spectacle lens before being fitted into a frame coincides with the eye point and also coincides with a prism reference point. Hereinafter, as an example of the spectacle lens according to one embodiment of the present invention, a spectacle lens before being fitted into a frame will be exemplified, but the present invention is not limited to this embodiment.

The position of the eyepoint can be specified by referring to a remark chart or a centration chart issued by a lens manufacturer.

The functional area is an area in which the light beam entering from the object-side surface is allowed to exit from the eyeball-side surface, while at least a part of the light beam entering into the wearer's pupil is not allowed to converge on the retina. The functional area is an annular area surrounding the central clear area in planar view.

An entire annular functional area does not necessarily have a surface shape of the spectacle lens (such as an opaque one that has been treated like frosted glass) which is different from the shape of the central clear area or does not necessarily have an internal embedding structure. For example, when providing a second refractive area (a base area that performs the same function as the central clear area) that achieves a prescribed refractive power around the convex area, while providing the convex area in an island shape as seen in the first refractive area of Patent document 1, an annular area including a base area and a convex area may be regarded as a functional area.

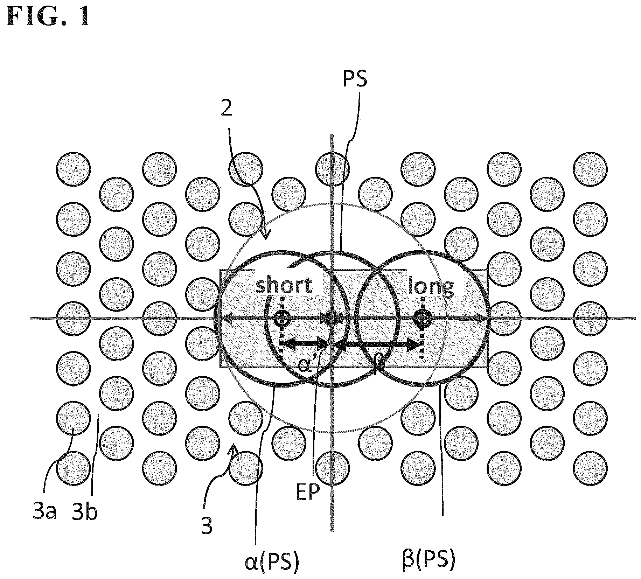

Further, as illustrated in FIG. 1 of Patent document 2, Patent document 2 shows a spectacle lens including a convex area formed in a ring shape in a beaded pattern in such a manner that a plurality of the convex areas are arranged in a radial direction, with an area where no convex area is formed being used as a base area. In this spectacle lens, the area between the ring of the beaded pattern with a smallest diameter and the ring of the beaded pattern with a largest diameter may be set as a functional area.

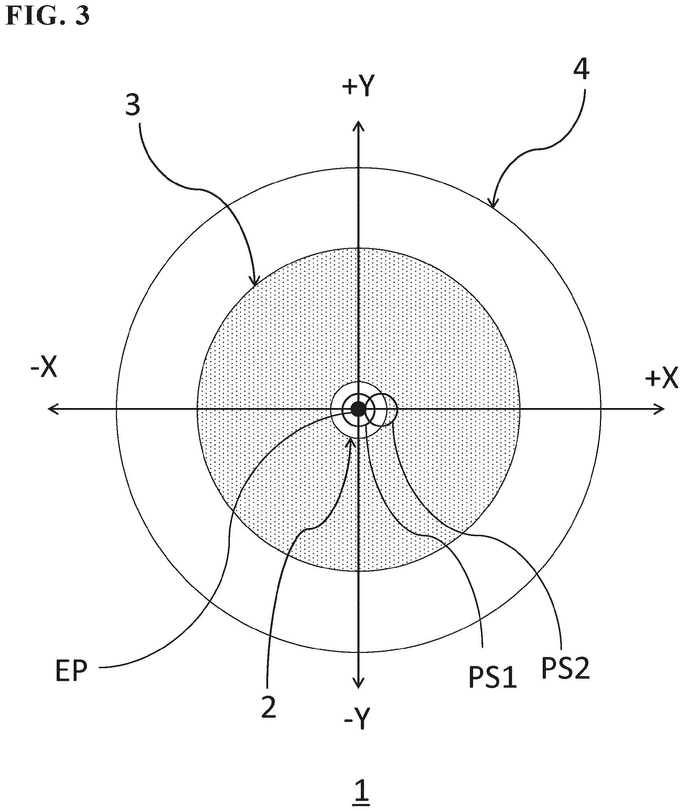

Further, regarding the functional area, as illustrated in FIG. 3B of Patent document 3, the functional area may be set as an area as an annular area between a portion closest to the eye point and a portion furthest from the eye point EP, when materials with different refractive indexes are embedded inside the spectacle lens.

### (Definition 1)

FIG. 1 is a schematic enlarged planar view for explaining (Definition 1) regarding a central clear area of a spectacle lens according to one aspect of the present invention. In FIG. 1, the configuration of the functional area 3 used in <Specific example 2> described later is used.

One of the features of one embodiment of the present invention is that in planar view, a maximum width of the rectangular portion in a range between d [mm] on an upper side and d [mm] on a lower side from the horizontal line passing through eye point EP in the horizontal direction, which is a portion within the central clear area 2, is larger on the nasal side from eye point EP than on the ear side from eye point EP, when d is at least one value in a range of 1.00 to 2.00.

For the definition described in the above paragraph, the following matter is taken into consideration: in the case of a near vision while wearing the spectacle lens 1 according to one embodiment of the present invention, the line of sight passes through the nasal side from the eye point EP in the horizontal direction. d is defined to be related to the line of sight, and the radius of a pupil size PS is taken into consideration. For example, when d [mm] is 2.00 [mm], it means that a pupil radius is assumed to be 2.00 [mm], that is, a pupil diameter is assumed to be 4.00 [mm]. When moving the line of sight within the central clear area 2, the definition described in the above paragraph means that a distance that the line of sight can move is greater on the nasal side in the horizontal direction than on the ear side in the horizontal direction from the eye point EP.

The value of d may be at least one value in a range of 1.00 or more and 2.00 or less, and may be 2.00 as exemplified in the above paragraph, or may be 1.50.

The maximum width of the rectangular portion on the nasal side from the eye point EP in the horizontal direction may be 3.60 mm or more (preferably 4.00 mm or more), and there is no upper limit. When defining the upper limit, it is sufficient to apply the upper limit of the size of the central clear area 2, which will be described later.

Although it is sufficient that the distance from the eye point EP toward a nose is larger than that from eye point EP toward an ear, the difference between the two distances may be, for example, a value in a range of 0.40 to 3.00 mm.

The difference between both distances may be defined as a relative value. For example, when the maximum width of the rectangular portion from the eye point EP toward the ear in the horizontal direction is taken as a denominator, and the maximum width from the eye point EP toward the nose is taken as a numerator, the value may be greater than 1.00 and less than or equal to 2.00. A lower limit of this value may be 1.20 or 1.40, and an upper limit of this value may be 1.80 or 1.60.

In (Definition 1), a circle may be used instead of a rectangle (another aspect of the Definition 1). Specifically, in a planar view, in a circle with a radius r [mm] that is a part within the central clear area 2 and whose center is on a horizontal line passing through the eye point EP, when r is at least one value in a range of 1.50 to 2.50, it may be so defined that the maximum distance from the eye point EP to the center of the circle in the horizontal direction is larger on the nasal side than on the ear side. To be more specific, on the assumption that the circles are circle α whose center lies on a horizontal line passing through the eye point EP and which can be placed closest to the ear in the horizontal direction within the central clear area 2 and circle β which can be placed closest to the nose in the horizontal direction within the central clear area 2, it may be so defined that distance β' between the center of the circle β and the eye point EP is greater than distance α' between the center of the circle α and the eye point EP. The value of r may be 2.00 or 1.50. Since the value of 2r is assumed to be a pupil diameter, each of these circles is also referred to as a clear pupil circle in this specification.

When a circle is used instead of a rectangle in (Definition 1), the maximum distance on the nasal side from the eye point EP to the center of the circle in the horizontal direction may be 1.60 mm or more (preferably 2.00 mm or more). Further, the maximum distance from the eye point EP to a nasal end of the circle in the horizontal direction may be 3.60 mm or more (preferably 4.00 mm or more). In either case, there is no upper limit. When specifying the upper limit, it is sufficient to apply the upper limit of the size of the central clear area 2, which will be described later.

When a circle is used instead of a rectangle in (Definition 1), the difference between the maximum distance on the ear side and the maximum distance on the nasal side from the eye point EP to the center of the circle in the horizontal direction may be, for example, in a range of 1.00 to 3.00 mm.

The difference between both distances may be defined as a relative value. For example, when the maximum distance on the ear side from the eye point EP to the center of the circle in the horizontal direction is taken as a denominator, and the maximum distance on the nasal side from the eye point EP to the center of the circle in the horizontal direction is taken as a numerator, the value may be greater than 1.00 and less than or equal to 2.00. A lower limit of this value may be 1.20 or 1.40, and an upper limit of this value may be 1.80 or 1.60.

### (Definition 1) may be adopted in combination with (another aspect of the Definition 1).

### (Definition 2)

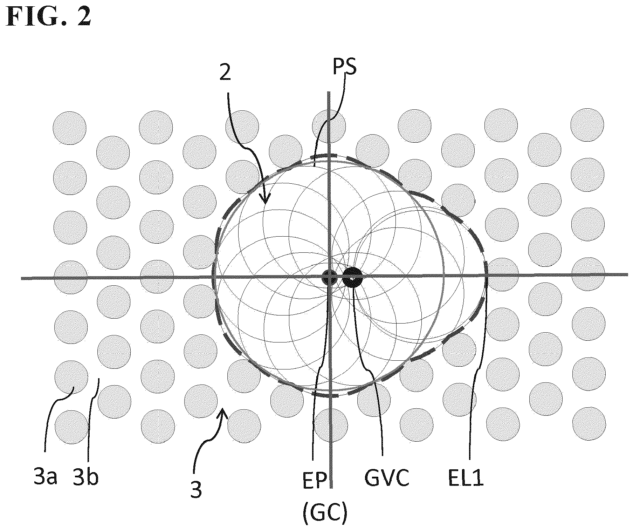

FIG. 2 is a schematic enlarged planar view for explaining (Definition 2) regarding the central clear area of the spectacle lens according to one aspect of the present invention. In FIG. 2, the configuration of the functional area 3 adopted in

### <Specific example 2> described later is adopted.

According to one aspect of the present invention, in planar view, the central clear area 2 may be shaped as an envelope (symbol EL1 in FIG. 2) surrounding the aggregate of all circles with a radius of 2.00 mm (having the same radius) (one of the circles is the circle attached with a symbol PS in FIG. 2) that circumscribes a portion of the functional area 3 that is shaped so that the light beam entering into the wearer's pupil is not allowed to converge on the retina, without including the other portion on the central clear area 2 side (in other words, it may be shaped as a boundary line between the central clear area 2 and the functional area 3). In the envelope shown hereinafter, the central clear area 2 may be shaped as an "aggregate of clear pupil circles" instead of the envelope surrounding the aggregate of clear pupil circles. In other words, the central clear area 2 may include the eye point EP and may be constituted by the aggregate of clear pupil circles.

In (Definition 2), when the envelope surrounding the aggregate is defined as the shape of the central clear area 2, the maximum distance from the eye point EP toward the nose in the horizontal direction within this shape may be 3.60 mm or more (preferably 4 mm or more), and there is no upper limit. When specifying the upper limit, it is sufficient to apply the upper limit of the size of the central clear area 2, which will be described later.

In (Definition 2), when the central clear area 2 is shaped as the envelope surrounding the above aggregate, the center of gravity GVC of the shape of the central clear area 2 may be arranged closer toward the nose than the eye point EP.

The above (Definition 2) is also one mode for specifying the shape of the central clear area 2. In addition, by placing the center of gravity GVC of the shape of the central clear area 2 closer toward the nose than the eye point EP, the line of sight can easily pass through the central clear area 2 when eyes are converged. When the center of gravity GVC of the shape of the central clear area 2 is placed on the horizontal nasal side when viewed from the eye point EP, the line of sight can more reliably pass through the central clear area 2 when eyes are converged.

In the shape of the central clear area 2, when a midpoint of the horizontal line passing through the eye point EP is placed closer toward the nose than the eye point EP, the line of sight can pass through the central clear area 2 even more reliably when eyes are converged.

Whether the above center of gravity GVC is adopted or the midpoint of the above horizontal line is adopted, a horizontal distance from the eye point EP to the center of gravity GVC or midpoint may be, for example, a value in a range of 0.10 (or 1.00) to 3.00 mm.

In the central clear area 2 defined in (Definition 2), the shape on the ear side and the shape on the nasal side are asymmetrical with respect to a vertical line passing through the eye point EP. As an example, on the ear side, the shape of the central clear area 2 is the shape that is half of a polygonal shape A with rounded corners, while on the nasal side, the remaining half of the shape protrudes from the center of gravity GVC of the shape A toward the nose in the horizontal direction.

The following definitions include the various contents described above and express one aspect of the present invention in functional terms.

### (Definition 3)

One of the features of one aspect of the present invention is that, in planar view, the central clear area 2 protrudes toward the nose rather than toward the ear in the horizontal direction when viewed from the eye point EP.

In the spectacle lens 1 according to one embodiment of the present invention, by adopting at least one of (Definition 1), (Definition 2), and (Definition 3), and by allowing the light beam entering into the wearer's pupil to passe through the central clear area 2, the light beam converges on the retina and good visibility can be obtained when a wearer of the spectacle lens 1 for suppressing the progression of myopia or hyperopia converges his or her eyes for near vision.

Each figure of the present application illustrates the case of a planar view of a right-eye lens, but one embodiment of the present invention is also applicable to a left-eye lens 1, and a spectacle lens pair in which one embodiment of the present invention is applied to each of the right-eye lens and the left-eye lens provides a function of suppressing the progression of myopia while also providing good visibility.

### <Preferable examples and modified examples of the spectacle lens 1>

Preferable examples and modified examples of the spectacle lens 1 according to one aspect of the present invention will be described below.

In the above (Definition 1), an entire annular functional area does not necessarily have a surface shape of the spectacle lens (such as an opaque one that has been treated like frosted glass) which is different from the shape of the central clear area or does not necessarily have an internal embedding structure. For example, when a convex area is provided in an island shape like the first refractive area of Patent document 1 and also a second refractive area that achieves a prescribed power (base area that has the same function as the central clear area) is provided around the convex area, an annular area including the base area and the convex area may be regarded as the functional area.

In the annular functional area, there may also be a configuration in which no convex area, etc., is provided over a predetermined rotation angle range when the +Y direction as viewed from the eye point EP is set as a rotation angle of zero degrees. In such a case, for example, in the case of a right-eye lens, there may be a configuration in which no convex area, etc., is provided over a rotation angle range of several degrees to more than 10 degrees around 90 degrees clockwise (horizontally on the nasal side). Even in that case, according to the above (Definition 1), the maximum width of the rectangular portion in the horizontal direction in a range between d [mm] on the upper side and d [mm] on the lower side from the horizontal line passing through the eye point, which is the portion within the central clear area, is still larger from the eye point toward the nose than from the eye point toward the ear. Also, the central clear area still extends horizontally toward the nose rather than toward the ear when viewed from the eye point.

There is no limit to the size and shape of the central clear area 2. One guideline for the lower limit of the size of the central clear area 2 is that it should be large enough to include a circle with a diameter of 5.00 mm centered on the eye point EP. One guideline for the upper limit of the size of the central clear area 2 is that it should be within a circle with a diameter of 10.00 mm centered on the eye point EP. The minimum value of the horizontal distance from the eye point EP to the edge of the central clear area 2 (minimum radius when the clear area is circular in planar view) may be 3.60 mm or less. The area of the central clear area 2 may be 80 mm² or less. The shape of the central clear area 2 may be circular, rectangular, elliptical, etc., in planar view.

There is no limit to the size and shape of the functional area 3. One guideline for the lower limit of the size of the functional area 3 is that it should be large enough to include a circumference with a diameter of 15 mm centered on the eye point EP. One guideline for the upper limit of the size of the functional area 3 is that it should be large enough to include a circumference with a diameter of 50.00 mm centered on the eye point EP. The shape of the functional area 3 is annular in planar view, and the ring may have a circular shape, a rectangular shape, an elliptical shape, etc., or a combination thereof on the inside (i.e. the boundary between the central clear area 2 and the functional area 3) and/or outside (i.e. the boundary between the outer clear area 4 and the functional area 3).

One guideline is that in the functional area 3, it may be defined that 30% or more (or 40% or more, 50% or more, or 60% or more) of the light beam entering into the wearer's pupil is not allowed to converge on the retina. With a large value of the percentage, it is expected that the effect of suppressing the progression of myopia or hyperopia will be large, but the visibility will be reduced. The value of the percentage may be appropriately determined in consideration of the effect of suppressing the progression of myopia or hyperopia and visibility.

In the functional area 3, the area of the configuration (convex area 3a, embedding structure) that exhibits the effect of suppressing the progression of myopia or hyperopia in planar view may be defined as 30% or more (or 40% or more, 50% or more, or 60% or more) of an entire functional area 3. The upper limit may be, for example, 70%.

The lens may also include an outer clear area 4, which is an area in contact with the functional area 3 on the outer edge side of the spectacle lens 1, and which allows the light beam entering from the object-side surface to exit from the eyeball-side surface, enter not the wearer's pupil, and converge on the retina. In that case, the functional area 3 becomes an annular area existing between the outer clear area 4 and the central clear area 2.

As one aspect of specifying the shape of the outer clear area 4, the aspect (Definition 2) of specifying the shape of the central clear area 2 may be used. That is, in planar view, the outer clear area 4 may be defined as including the aggregate of clear pupil circles without including the eye point EP. In the spectacle lens 1, the area other than the central clear area 2 and the outer clear area 4 may be defined as the functional area 3.

A specific aspect of specifying the shape of the outer clear area 4 is as follows. In planar view, attention is paid to the portion located closest to the outer edge of the spectacle lens 1, which is the portion of the functional area 3 that is shaped so that the light beam entering into the wearer's pupil is not allowed to converge on the retina. Here, "the portion located closest to the outer edge of the spectacle lens 1" means each portion that is farthest in a radial direction in each range of 0 to 360 degrees in a circumferential direction when viewed from the eye point EP. The shape of the area sandwiched between the envelope EL2 surrounding the aggregate of all circles with a radius of 2.00 mm (all having the same radius) that circumscribes each portion on the outer edge side of the spectacle lens 1 without including other parts and the outer edge of the spectacle lens 1, may be the shape of the outer clear area 4. The shape of the outer clear area 4 may be the "aggregate of clear pupil circles" instead of the envelope surrounding the aggregate of clear pupil circles.

The outer clear area 4 may be annular, or may have a shape that constitutes only a part of the ring. That is, a part of the functional area 3 may be in contact with the outer edge of the spectacle lens 1, and another part of the functional area 3 may be in contact with the outer clear area 4. Further, the spectacle lens 1 according to one embodiment of the present invention may be the spectacle lens 1 after being fitted into a frame, and a part of the functional area 3 of the spectacle lens 1 may be in contact with the outer edge of the spectacle lens 1, and another part of the functional area 3 may be in contact with the outer clear area 4. In this case, although another functional area 3 is not prevented from being provided to further outer edge side of the outer clear area 4, an entire outer edge side of the functional area 3 is the outer clear area 4, namely, it is preferable that configuration intended to exhibit the effect of suppressing the progression of myopia or hyperopia (example: defocus area, convex area 3a and/or concave area, embedding structure, etc.) is not provided on the outer edge side of the functional area 3.

### <One specific example of the spectacle lens 1>

An arrangement of the plurality of defocus areas is not particularly limited, and can be determined, for example, from the viewpoints of external visibility of the defocus area, design enhancement by the defocus area, refractive power adjustment by the defocus area, etc.

In the functional area 3 arranged around the central clear area 2 of the spectacle lens 1, approximately circular defocus areas may be arranged in the form of islands (that is, not adjacent to each other but spaced apart) at equal intervals in a circumferential direction and a radial direction. An example of independently and discretely arranging each convex area 3a such that the center thereof becomes a vertex of an equilateral triangle (the center of each defocus area is arranged at the vertex of a honeycomb structure: hexagonal arrangement) can be given as an example of the arrangement of the defocus areas in planar view. In that case, the distance between the defocus areas may be 1.0 to 2.0 mm. Further, the number of defocus areas may be 100 to 100,000.

In the functional area 3, the defocus area is an example of a configuration that has the effect of suppressing the progression of myopia or hyperopia.

The defocus area is the area in which at least a part of the area does not allow light to be focused at a position where the light should be focused by the base area 3b, from a geometrical optics perspective. The defocus area is a portion corresponding to a minute convex portion of Patent document 1. The spectacle lens 1 according to one aspect of the present invention is a myopia progression suppressing lens, similar to the spectacle lens described in Patent document 1. Similar to the minute convex portion of Patent document 1, the plurality of defocus areas according to one aspect of the present invention may be formed on at least one of the object-side surface and the eyeball-side surface of the spectacle lens 1. This specification mainly shows a case where a plurality of defocus areas are provided only on the object-side surface of the spectacle lens 1. Hereinafter, unless otherwise specified, the case where the defocus area has a curved shape protruding toward the outside of the lens will be shown as an example.

It is preferable that half or more of the plurality of defocus areas (all defocus areas in the functional area) are arranged at the same period in planar view. An example of a pattern of the same period is an equilateral triangular arrangement (the center of the defocus area is placed at the vertex of an equilateral triangle; hexagonal arrangement is also acceptable) in planar view. The direction of the period may be a circumferential direction and/or a radial direction, and the percentage of the defocus areas is preferably 80% or more, more preferably 90% or more, even more preferably 95% or more. Hereinafter, preferable examples of "the number of half or more (or 80% or more) of all defocus areas in the functional area" will be 80% or more, 90% or more, and 95% or more in an order of preference as described above, and repeated descriptions will be omitted.

The defocus area may have a spherical shape, an aspherical shape, a toric surface shape, or a mixture thereof (for example, a central location of each defocus area has a spherical shape, and a peripheral location outside the central location has an aspherical shape). A boundary between the central location and the peripheral location may be provided at 1/3 to 2/3 of a radius of the defocus area (or convex area 3a) in planar view. However, it is preferable that at least the central location of the defocus area (or convex area 3a) has a convex curved shape that protrudes toward the outside of the lens. Further, since it is preferable that half or more of the plurality of defocus areas (all defocus areas in the functional area) be arranged at the same period in planar view, the defocus areas are preferably spherical.

Each defocus area is configured as follows, for example. A diameter of the defocus area in planar view is preferably about 0.6 to 2.0 mm. A surface area of each may be approximately 0.50 to 3.14 mm². The convex area 3a has a spherical radius of curvature of 50 to 250 mm, preferably approximately 86 mm.

In the functional area 3, the percentage of a total area of the defocus areas with respect to a total area of the defocus areas and the base area 3b, may be 20 to 60%.

There is no limit to a specific value of a defocus power in each defocus area, but for example, it is preferable that a minimum value of the defocus power provided by the defocus area on the spectacle lens 1 is within a range of 0.50 to 4.50D, and a maximum value thereof is within a range of 3.00 to 10.00D. Preferably, a difference between the maximum value and the minimum value is within a range of 1.00 to 5.00D.

"Defocus power" refers to a difference between a refractive power of each defocus area and a refractive power of a portion other than each defocus area. In other words, the "defocus power" is a difference obtained by subtracting the refractive power of the base portion from an average value of the minimum refractive power and maximum refractive power at a predetermined location in the defocus area. For example, this specification shows a case where the defocus area is the convex area 3a.

The "refractive power" in this specification refers to an average refractive power that is an average value of the refractive power in a direction where the refractive power is minimum and the refractive power in a direction where the refractive power is maximum (perpendicular to the direction where the refractive power is minimum).

A lens base material comprises thermosetting resin material such as thiourethane, allyl, acrylic, or epithio. As the resin material of the lens base material, other resin material that provides a desired degree of refraction may be selected. Further, the lens base material may comprise inorganic glass instead of the resin material.

A hard coat film is formed using, for example, a thermoplastic resin or a UV curable resin. The hard coat film can be formed by immersing the lens base material in a hard coat liquid, or using spin coating, or the like. By coating with such a hard coat film, the durability of the spectacle lens 1 can be improved.

An antireflection film is formed by, for example, depositing an antireflection agent such as ZrO₂ MgF₂, Al₂O₃, etc., by vacuum deposition. By coating with such an antireflection film, improvement of the visibility of the image transmitted through the spectacle lens 1 is achieved.

As described above, a plurality of defocus areas are formed on the object-side surface of the lens base material. Accordingly, when that surface is coated with a hard coat film and an anti-reflection film, a plurality of defocus areas are formed by the hard coat film and the antireflection film, following the defocus areas in the lens base material.

In manufacturing the spectacle lens 1, first, the lens base material is molded by a known molding method such as cast polymerization. For example, by performing molding by cast polymerization using a mold having a molding surface with a plurality of recesses, a lens base material having defocus areas on at least one surface can be obtained.

Then, once the lens base material is obtained, the hard coat film is then formed on the surface of the lens base material. The hard coat film can be formed by immersing the lens base material in a hard coat liquid, or using spin coating, or the like.

After forming the hard coat film, the antireflection film is further formed on the surface of the hard coat film. The antireflection film can be formed by depositing a raw material for the film by vacuum evaporation.

By the manufacturing method with such a procedure, the spectacle lens 1 having a plurality of defocus areas on the object-side surface in such a manner as protruding toward the object side, can be obtained.

The thickness of the film coating through the above procedure may be, for example, in a range of 0.1 to 100 µm (preferably 0.5 to 5.0 µm, more preferably 1.0 to 3.0 µm). However, the thickness of the film coating is determined depending on a function required of the film coating, and is not limited to the above range.

One or more layers can also be formed on the film coating. Examples of such film coatings include various coatings such as an antireflection coating, water-repellent or hydrophilic antifouling coating, and antifogging coating. Known techniques can be applied to the method of forming these coatings.

### <Spectacles>

A technical idea of the present invention is also reflected in spectacles fitted into a frame, with the vicinity of the periphery of the spectacle lens 1 cut. There are no limits to the type or shape of the frame, and the frame may be full rim, half rim, under rim, or rimless.

Hereinafter, a specific example of the spectacle lens 1 according to one aspect of the present invention will be shown. The present invention is not limited to the following specific examples.

FIG. 3 is a schematic planar view of a <specific example 1> of a spectacle lens according to one aspect of the present invention before applying one aspect of the present invention.

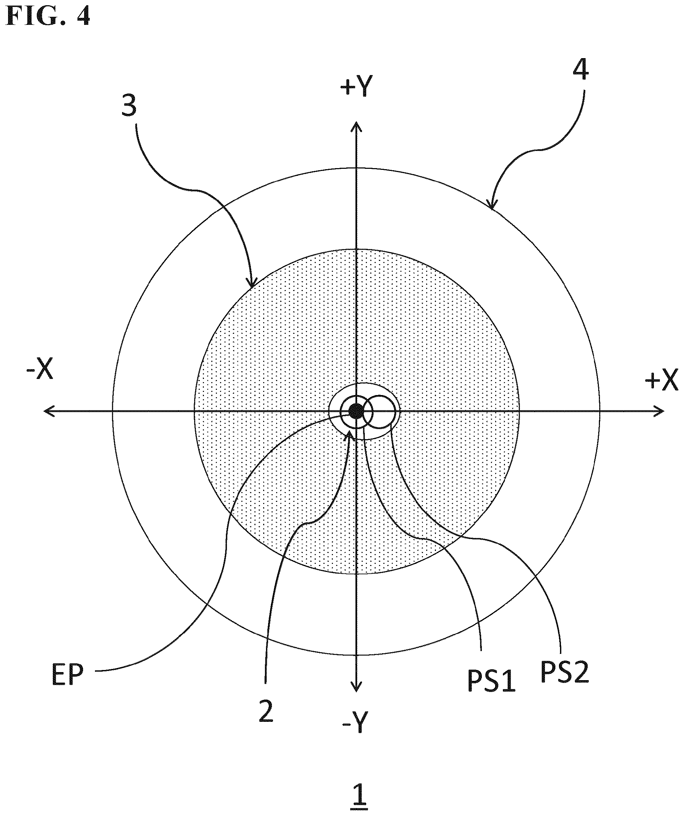

FIG. 4 is a schematic planar view of a <specific example 1> of a spectacle lens according to one aspect of the present invention after applying one aspect of the present invention.

The following spectacle lens 1 was produced. The spectacle lens 1 consists of only a lens base material, and no other material is laminated to the lens base material. As the prescribed refractive power, S (spherical refractive power) was set to 0.00D, and C (astigmatic refractive power) was set to 0.00D.
- Diameter of the lens base material in planar view: 60.00mm
- Type of the lens base material: PC (polycarbonate)
- Refractive index of the lens base material: 1.589

Since the above content is common to each specific example, the description thereof will be omitted hereafter.

In this specific example, regarding the central clear area 1, the functional area 3, and the outer clear area 4 before applying one embodiment of the present invention, the range of the central clear area 2 was set as a circular area with a radius of 3.50 mm from the eye point EP, and the range of the functional area 3 was set as a circle with a radius of 20.00 mm from the lens center (excluding the central clear area 2), and the outer clear area 4 was provided closer to the outer edge of the spectacle lens 1 than the functional area 3.

The functional area 3 of this specific example is assumed to have been subjected to an opaque process such as frosted glass over an entire functional area 3. On the other hand, the functional area 3 may be an annular area including a base area 3b and having a configuration intended to provide an effect of suppressing the progression of myopia or hyperopia (example: defocus area, convex area 3a and/or concave area, embedding structure, etc.).

Then, by applying one aspect of the present invention, the central clear area 2 was expanded horizontally toward the nose, and the shape of the central clear area 2 was extended into an ellipse. The central clear area 2 was 1.00 mm extended toward the nose compared to the central clear area 2 before applying one aspect of the present invention. As a result, the central clear area 2 is 1.00 mm protruded toward the nose rather than toward the ear. As a result, although the central clear area 2 was a perfect circle with a radius of 3.50 mm (diameter 7.00 mm) before applying one aspect of the present invention, the central clear area 2 became an ellipse with a vertical axis (short axis) of 7.00 mm and a horizontal axis (long axis) of 8.00 mm after applying one aspect of the present invention.

This specific example satisfied the above (Definition 1). Specifically, even when d is set to any value in a range of 1.00 to 2.00, the maximum horizontal width of the rectangular portion in (Definition 1) was 1.00 mm larger on the nasal side from the eye point EP than on the ear side from eye point EP. This specific example also satisfied the above (another aspect of the Definition 1).

In the shape of the central clear area 2 when the above (Definition 2) is adopted, the center of gravity GVC was on the horizontal line passing through the eye point EP, and a horizontal distance from the eye point EP to the center of gravity GVC was 0.50 mm, and a horizontal distance to a midpoint of the horizontal line passing through the eye point EP was 0.50 mm. In the case of a pupil diameter of 4.00 mm, a maximum amount of inward movement (distance for moving toward the nose) in the central clear area 2 was increased from 1.50 mm to 2.00 mm.

In this specific example, by applying one aspect of the present invention, the central clear area 2 can include not only a distance pupil position PS1 but also a near pupil position PS2.

### <Specific example 2>

FIG. 5 is a schematic planar view of a <specific example 2> of the spectacle lens according to one aspect of the present invention before applying one aspect of the present invention.

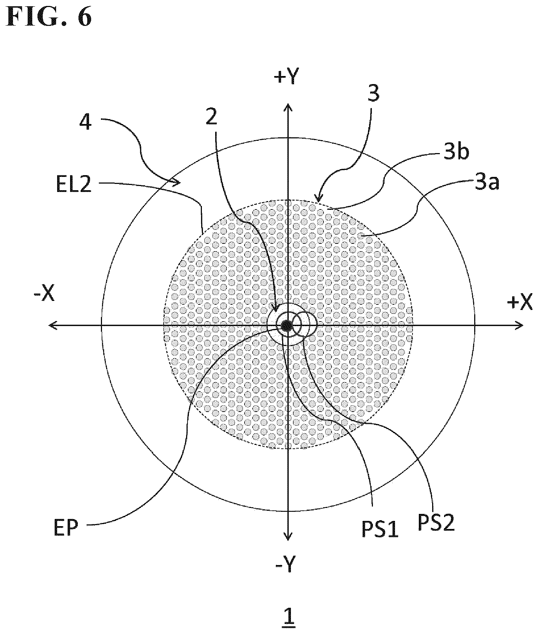

FIG. 6 is a schematic planar view of a <specific example 2> of the spectacle lens according to one aspect of the present invention after applying one aspect of the present invention.

In this specific example, the following configuration was adopted.
·Configuration of functional area 3: Convex area 3a are discretely arranged as defocus areas.

In the functional area 3, the area other than the convex area 3a is the base area 3b.
- Shape of convex area 3a: spherical
- Refractive power of convex area 3a: 3.50D
- Surface on which convex area 3a is formed: object side surface
- Arrangement of the convex areas 3a in planar view: each convex area 3a is independently and discretely arranged so that the center thereof is the vertex of an equilateral triangle (the center of each convex area 3a is arranged at the vertex of a honeycomb structure)
- Shape of convex area 3a in planar view: perfect circle (diameter 1.00 mm)
- Pitch between each convex area 3a (distance between the centers of convex areas 3a): 1.50 mm
- Pupil diameter of wearer: assumed to be 4.00mm

In this specific example, regarding the central clear area 2, the functional area 3, and the outer clear area 4 before applying one embodiment of the present invention, the range of the central clear area 2 was set as a circular area with a radius of approximately 3.45 mm from the eye point EP, and the range of the functional area 3 was set within a circle with a radius of 20.00 mm from the center of the lens (excluding the central clear area 2), and the outer clear area 4 was provided closer to the outer edge of the spectacle lens 1 than the functional area 3.

Even when the aspect of specifying the shape of the central clear area 2 (Definition 2) is applied, the central clear area 2 has a shape whose contour is an envelope (for example, envelope EL1 in Figure 2) surrounding the aggregate of the circles that circumscribes the convex areas 3a in the functional area 3 (same for subsequent specific examples).

Further, even when applying one aspect of specifying the shape of the outer clear area 4 using the aspect of specifying the shape of the central clear area 2 (Definition 2), the shape extremely close to the annular area described in the above paragraph is obtained as the functional area 3 (the same applies to the following specific examples). Strictly speaking, an outer boundary line (envelope EL2, which is a broken line) of the functional area 3 shown in each figure according to specific examples 2 and 3 is not circular but is slightly convex toward the center of the circle (the functional area 3 is concave) in the part where the convex area 3a does not exist, but in each figure, the envelope EL2 is shown as a circle in a schematic planar view.

By applying one aspect of the present invention, the central clear area 2 was extended horizontally toward the nose. Specifically, regarding the convex areas 3a before applying one aspect of the present invention, the convex areas 3a, each on the upper and lower sides closest to the horizontal line passing through the eye point EP and closest to the eye point EP (geometric center GC of the spectacle lens 1), were not provided. Thereby, the shape of the central clear area 2 is extended horizontally toward the nose.

This specific example satisfied the above (Definition 1). Specifically, setting d to 1.50 reveals that the maximum width of the rectangular portion in (Definition 1) in the horizontal direction was 1.30 mm larger on the nasal side from the eye point EP than on the ear side from the eye point EP. This specific example also satisfied the above (another aspect of Definition 1).

In the shape of the central clear area 2 when the above (Definition 2) is adopted, the center of gravity GVC was on the horizontal line passing through the eye point EP, and the distance in the horizontal direction from the eye point EP to the center of gravity GVC was about 0.4 mm, and the distance in the horizontal direction to the midpoint of the horizontal line passing through the eye point EP was 0.59 mm. In the case of a pupil diameter of 4 mm, the maximum amount of inward movement (distance that can be moved toward the nose) in the central clear area, increased from 1.51 mm to 2.70 mm.

In this specific example, by applying one aspect of the present invention, the central clear area 2 can include not only the distance pupil position PS1 but also the near pupil position PS2.

### <Specific example 3>

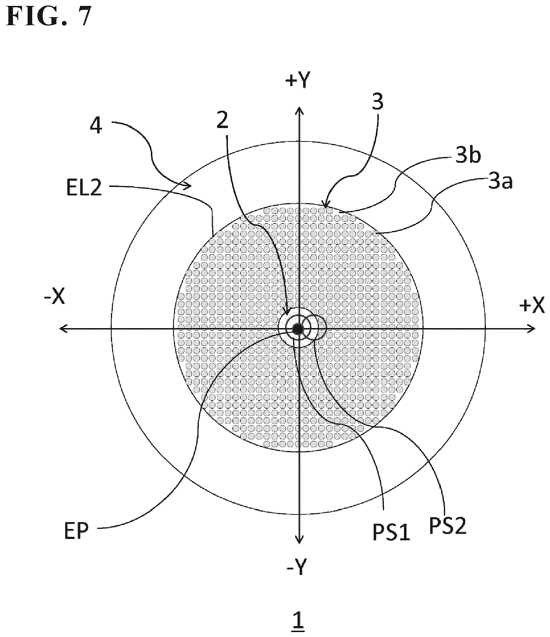

FIG. 7 is a schematic planar view of a <specific example 3> of the spectacle lens according to one aspect of the present invention before applying one aspect of the present invention.

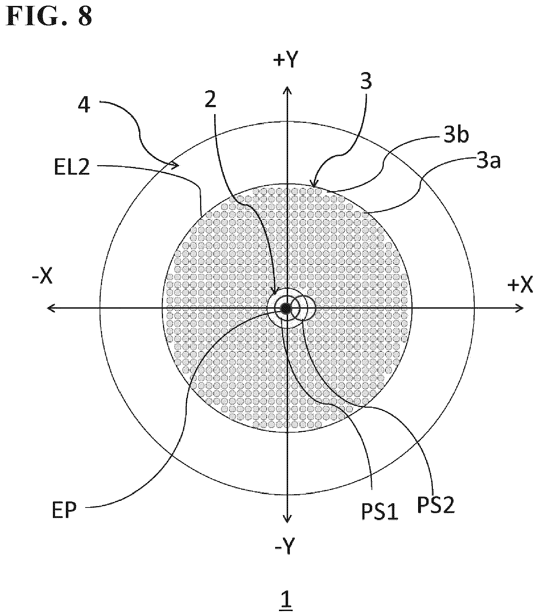

FIG. 8 is a schematic planar view of a <specific example 3> of the spectacle lens according to one aspect of the present invention after applying one aspect of the present invention.

In this specific example, the following changes were made to the specific example 2.

The arrangement of the convex area 3a in planar view was changed. Specifically, the convex areas 3a were aligned in horizontal and vertical directions. The pitch between the convex areas 3a (the distance between the centers of the convex areas 3a) was set to 1.25 mm.

In this specific example, regarding the central clear area 2, the functional area 3, and the outer clear area 4 before applying one embodiment of the present invention, the range of the central clear area 2 was set as a circular area with a radius of 3.25 mm from the eye point EP, and the range of the functional area 3 was set as a circle with a radius of 20.00 mm from the center of the lens (excluding the central clear area 2), and the outer clear area 4 was provided closer to the outer edge of the spectacle lens 1 than the functional area 3.

Then, by applying one embodiment of the present invention, the central clear area 2 was expanded horizontally toward the nose. Specifically, regarding the convex areas 3 before applying one embodiment of the present invention, total of five convex areas, each on the upper and lower sides closest to the horizontal line passing through the eye point EP (geometric center GC of the spectacle lens 1) and closest to the eye point EP, and one through which the horizontal line passes, and in addition to those, regarding the convex areas 3a of the adjacent column (aligned in the Y direction), each on the upper and lower sides closest to the horizontal line, were not provided. Thereby, the shape of the central clear area 2 is extended horizontally toward the nose.

This specific example satisfied the above (Definition 1). Specifically, setting d to 1.50 reveals that the maximum width of the rectangular portion in the horizontal direction in (Definition 1) was 1.25 mm larger on the nasal side from the eye point EP than on the ear side from the eye point EP. This specific example also satisfied the above (another aspect of the Definition 1).

In the shape of the centrale clear area 2 when the above (Definition 2) was adopted, the center of gravity GVC was on the horizontal line passing through the eye point EP, and the distance in the horizontal direction from the eye point EP to the center of gravity GVC was about 0.4 mm, and the distance in the horizontal direction to the midpoint of the horizontal line passing through the eye point EP was 0.63 mm. In the case of a pupil diameter of 4 mm, the maximum amount of inward movement (distance that can be moved toward the nose) in the central clear area increased from 1.25 mm to 2.50 mm.

In this specific example, by applying one aspect of the present invention, the central clear area 2 can include not only the distance pupil position PS1 but also the near pupil position PS2.

### <Specific example 4>

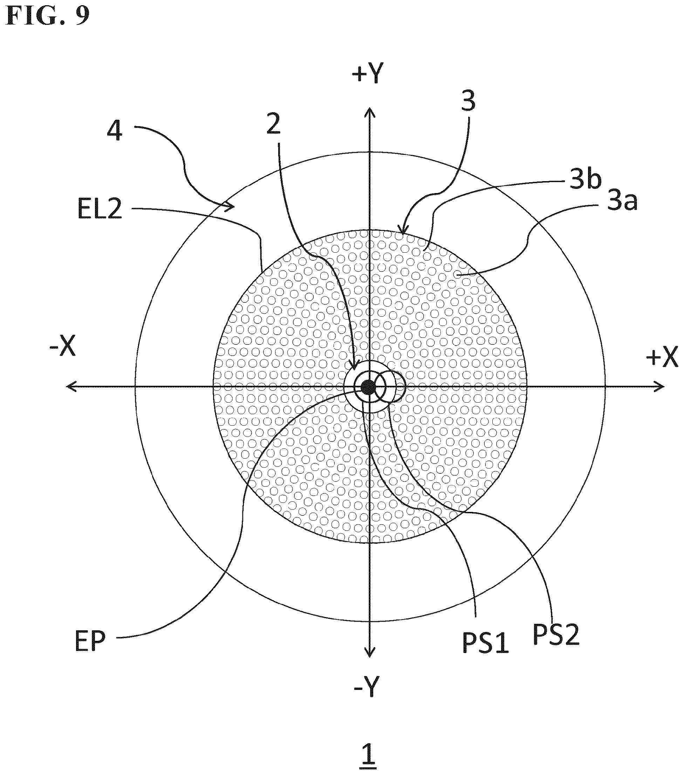

FIG. 9 is a schematic planar view of a <specific example 4> of a spectacle lens according to one aspect of the present invention before applying one aspect of the present invention.

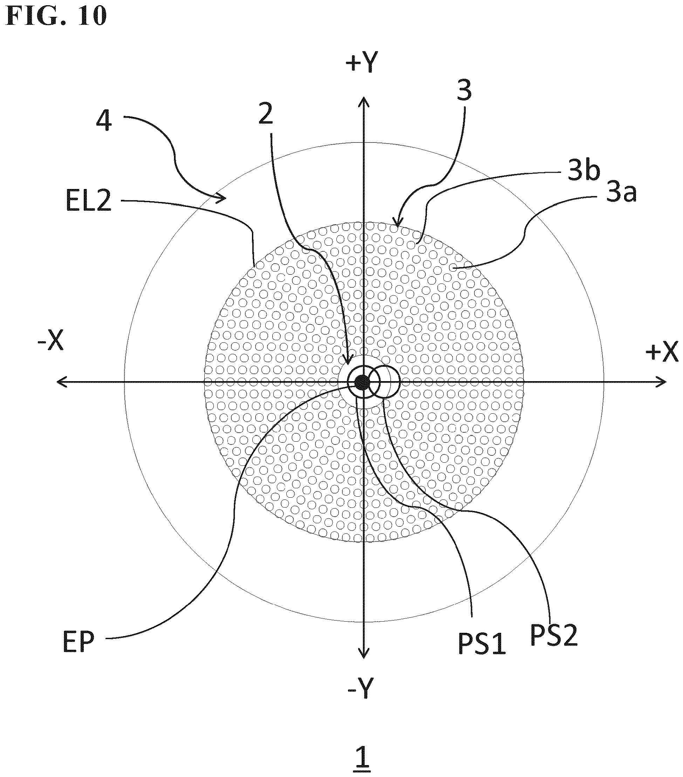

FIG. 10 is a schematic planar view of a <specific example 4> of a spectacle lens according to one aspect of the present invention after applying one aspect of the present invention.

In this specific example, the following changes were made to the specific example 2.

The arrangement of the convex area 3a in planar view was changed. Specifically, the convex areas 3a were aligned in the circumferential direction. This alignment was made for each diameter (for each distance from the eyepoint EP). An alignment status is shown in the table below. In the table below, the ring number is a number assigned to a circumferentially aligned group of the convex areas 3a in an order of closest to the eye point EP, and a radius is a radius of the ring, and the number of convex areas 3a is the number of convex areas 3a arranged on the ring.

**[Table 1]**

| Ring number | Radius (mm) | The number of convex areas |
|---|---|---|
| 1 | 3.84 | 16 |
| 2 | 5.27 | 22 |
| 3 | 6.7 | 28 |
| 4 | 8.13 | 34 |
| 5 | 9.56 | 40 |
| 6 | 10.99 | 46 |
| 7 | 12.42 | 52 |
| 8 | 13.85 | 58 |
| 9 | 15.29 | 64 |
| 10 | 16.72 | 70 |
| 11 | 18.15 | 76 |
| 12 | 19.58 | 82 |

In this specific example, regarding the central clear area2, the functional area 3, and the outer clear area 4 before applying one embodiment of the present invention, the range of the central clear area 2 was set as a circular area with a radius of 3.35 mm from the eye point EP, and the range of the functional area 3 was set as a circle with a radius of 20.00 mm from the center of the lens (excluding the central clear area 2), and the outer clear area 4 was provided closer to the outer edge of the spectacle lens 1 than the functional area 3.

Then, by applying one aspect of the present invention, the central clear area 2 was expanded horizontally toward the nose. Specifically, regarding the convex areas 3a before applying one aspect of the present invention, a total of three convex areas 3a, each on the upper and lower sides closest to the horizontal line passing through the eye point EP and closest to the eye point EP (geometric center GC of the spectacle lens 1), and one through which the horizontal line passes, were not provided. Thereby, the shape of the central clear area 2 is extended horizontally toward the nose.

This specific example satisfied the above (Definition 1). Specifically, setting d to 1.50 reveals that the maximum width of the rectangular portion in (Definition 1) in the horizontal direction was 1.54 mm larger on the nasal side from the eye point EP than on the ear side from the eye point EP. This specific example also satisfied the above (another aspect of the Definition 1).

In the shape of the central clear area 2 when the above (Definition 2) is adopted, the center of gravity GVC was on the horizontal line passing through the eye point EP, and the distance in the horizontal direction from the eye point EP to the center of gravity GVC was about 0.5 mm, and the distance in the horizontal direction to the midpoint of the horizontal line passing through the eye point EP was 0.72 mm. In the case of a pupil diameter of 4 mm, the maximum amount of inward movement (distance that can be moved toward a nose) in the central clear area increased from 1.34 mm to 2.47 mm.

In this specific example, by applying one aspect of the present invention, the central clear area 2 can include not only the distance pupil position PS1 but also the near pupil position PS2.

The technical scope of the present invention is not limited to the above-described embodiments, but also includes various modifications and improvements within the scope of deriving specific effects obtained by the constituent elements of the invention and their combinations.

### Description of signs and numerals

1... Spectacle lens
2... Central clear area
3...Functional area
3a... Convex area
3b...Base area
4...Outer clear area
EP...Eye point
GC...Geometric center
GVC...Center of gravity
PS...Pupil size
PS1...Distance pupil position
PS2...Near pupil position
EL1...Envelope (shape of central clear area)
EL2...Envelope (shape of a boundary between outer clear area and functional area)

## Claims

1. A spectacle lens, comprising:
a central clear area that is an area including an eye point and allows a light beam entering from an object-side surface to exit from an eyeball-side surface, enter into a wearer's pupil, and converge on a retina; and
a functional area that is an annular area surrounding the central clear area, and that does not allow at least a part of the light beam entering into the wearer's pupil to converge on the retina, while allowing the light beam entering from the object-side surface to exit from the eyeball-side surface,
wherein in planar view, a maximum width of a rectangular portion in a horizontal direction in a range between d [mm] on an upper side and d [mm] on a lower side from a horizontal line passing through the eye point, is larger from the eye point toward a nose than from the eye point toward an ear when d is at least one value in a range of 1.00 to 2.00.

2. The spectacle lens according to claim 1, wherein d is 1.50.

3. The spectacle lens according to claim 1 or 2, wherein the maximum width of the rectangular portion from the eye point toward the nose in the horizontal direction is 3.60 mm or more.

4. A spectacle lens, comprising:
a central clear area that is an area including an eye point and allows a light beam entering from an object-side surface to exit from an eyeball-side surface, enter into a wearer's pupil, and converge on a retina; and
a functional area that is an annular area surrounding the central clear area, and that does not allow at least a part of the light beam entering into the wearer's pupil to converge on the retina, while allowing the light beam entering from the object-side surface to exit from the eyeball-side surface,
wherein in planar view, when the central clear area is shaped as an aggregate of all circles with a radius of 2.00 mm that circumscribes a portion of the functional area that is shaped so that the light beam entering into the wearer's pupil does not converge on the retina, without including the other portion on the central clear area side, a shape on an ear side and a shape on a nasal side are asymmetrical with respect to a vertical line passing through the eye point, and a maximum distance from the eye point toward the nose in a horizontal direction is 3.60 mm or more.

5. The spectacle lens according to claim 4, wherein at least one of a center of gravity in the shape of the central clear area and a midpoint of a horizontal line passing through the eye point in the shape of the central clear area is located closer to the nose than the eye point.

6. A spectacle lens, comprising:
a central clear area that is an area including an eye point and allows a light beam entering from an object-side surface to exit from an eyeball-side surface, enter into a wearer's pupil, and converge on a retina; and
a functional area that is an annular area surrounding the central clear area, and that does not allow at least a part of the light beam entering into the wearer's pupil to converge on the retina, while allowing the light beam entering from the object-side surface to exit from the eyeball-side surface,
wherein in planar view, the central clear area extends horizontally toward a nose rather than toward an ear when viewed from the eye point.

7. The spectacle lens according to any one of claims 1 to 6, comprising:
an outer clear area, which is an area in contact with the functional area on an outside edge side of the spectacle lens, and which allows the light beam entering from the object-side surface to exit from the eyeball-side surface, enter into the wearer's pupil and converge on the retina.

8. The spectacle lens according to any one of claims 1 to 7, wherein the functional area does not allow 30% or more of the light beam entering into the wearer's pupil to converged on the retina.

9. The spectacle lens according to any one of claims 1 to 8, wherein in planar view, the central clear area has a size that fits within a circle with a diameter of 10.00 mm centered on the eye point.
